# EUROPÄISCHE PATENTSCHRIFT

(11) **EP 3 152 102 B1**
(45) Veröffentlichungstag und Bekanntmachung des Hinweises auf die Patenterteilung: **22.08.2018**
(21) Anmeldenummer: 15732524.2
(22) Anmeldetag: 03.06.2015
(51) Int. Cl.: B62D 59/04, B60P 3/06, B60P 3/40

(54) **FAHRZEUG-VERBUND MIT MEHREREN ANGETRIEBENEN FAHRZEUGMODULEN**
VEHICLE COMBINATION WITH MULTIPLE DRIVEN VEHICLE MODULES
ENSEMBLE DE VÉHICULES COMPRENANT PLUSIEURS MODULES DE VÉHICULE ENTRAÎNÉS

(30) Priorität: 04.06.2014 DE 102014007979; 04.06.2014 DE 202014004510 U
(43) Veröffentlichungstag der Anmeldung: 12.04.2017
(73) Patentinhaber: Scheuerle Fahrzeugfabrik GmbH, 74629 Pfedelbach (DE)
(72) Erfinder: MUGELE, Ulrich, 74629 Pfedelbach (DE)
(74) Vertreter: Leitner, Waldemar
(86) Internationale Anmeldenummer: PCT/EP2015/001132
(87) Internationale Veröffentlichungsnummer: WO 2015/185215

(56) Entgegenhaltungen:
- EP-A1- 2 394 835
- WO-A1-2004/074031
- WO-A2-2007/062640
- US-A1- 2005 230 934

## Beschreibung

Die Erfindung betrifft einen Fahrzeug-Verbund mit mehreren angetriebenen Fahrzeugmodulen, wobei jedes Fahrzeugmodul mindestens eine angetriebene Achse mit mindestens einem Antriebsmotor aufweist, wobei der Fahrzeug-Verbund mindestens eine Antriebseinrichtung für die Antriebsmotoren der Achsen der Fahrzeugmodule aufweist, durch welche die zum Antrieb dieser Antriebsmotoren benötigte Antriebsenergie erzeugbar ist, und wobei der Fahrzeug-Verbund mindestens eine Steuereinrichtung besitzt, durch welche zumindest die Antriebsmotoren der angetriebenen Achsen der Fahrzeugmodule ansteuerbar, insbesondere an- und abschaltbar, sind.

Es sind modulare Schwerlastfahrzeuge mit integriertem Antrieb bekannt, die dadurch ausgebildet werden, dass mehrere Fahrzeugmodule nebeneinander und/oder hintereinander angeordnet werden, so dass durch eine mechanische Verbindung der einzelnen Fahrzeugmodule ein Fahrzeug-Verbund ausgebildet wird. Die einzelnen Fahrzeugmodule weisen eine oder mehrere jeweils von mindestens einem Antriebsmotor angetriebene Achsen auf. Die Antriebseinrichtung des Fahrzeug-Verbunds weist ein Antriebsaggregat mit einem Verbrennungsmotor auf, der eine Pumpenanordnung zur Erzeugung eines hydraulischen oder pneumatischen Drucks antreibt. Durch Druckleitungen wird das vom Antriebsaggregat der Antriebseinrichtung druckbeaufschlagte Druckmedium zu den Antriebsmotoren der Achsen der Fahrzeugmodule des Fahrzeug-Verbunds geleitet. Es ist auch bekannt, dass zum Antrieb einer oder mehrerer Achsen eines oder mehrerer Fahrzeugmodule als Antriebsmotor ein Elektromotor verwendet wird. In diesem Fall weist die Antriebseinrichtung als Antriebsaggregat einen Generator auf, der elektrischen Strom erzeugt, welcher über entsprechende Leitungen zu den Elektromotoren der elektrisch angetriebenen Achsen geführt wird.

Es ist ein Fahrzeug-Verbund bekannt, der aus einer Zugmaschine und mehreren von dieser gezogenen Anhängern besteht. Einer oder mehrere dieser Anhänger sind als ein Fahrzeugmodul mit mindestens einer angetriebenen Achse ausgebildet, die von der Antriebseinheit mit der zum Antrieb der Antriebsmotoren der Achsen erforderlichen Energie versorgt wird. Die Achsen der entsprechend ausgerüsteten Anhänger sind dabei derart ausgebildet, dass sie bei abgeschaltetem Achsen-Antrieb mit einer für einen Straßentransport geeigneten, hohen Geschwindigkeit, z. B. 80 km/h, gezogen werden können. Der Grund, einen derartigen Unterstützungsantrieb vorzusehen, liegt darin, dass es hierdurch nicht mehr erforderlich ist, außer der am vorderen Ende des Fahrzeug-Verbunds befindlichen Zugmaschine eine weitere, hintere Zugmaschine vorzusehen, die zum Überwinden von Steigungen zugeschaltet wird.

Sowohl bei dem bekannten selbstangetriebenen Fahrzeug-Verbund als auch bei dem eine Zugmaschine und daran angekoppelte Anhänger verwendenden Fahrzeug-Verbund ist bis jetzt vorgesehen, dass die einzelnen Achsen der Fahrzeugmodule des Fahrzeug-Verbunds mit den gleichen Antriebsmotoren ausgestattet und die Steuerung dieser Motoren nur fahrzeugmodulintern, also jeweils auf ein einziges Fahrzeugmodul - wie z. B. einen einzigen Anhänger - bezogen ist. Bei einem bekannten selbstangetriebenen Schwerlast-Fahrzeug ist vorgesehen, dass in einer ersten Fahrstufe sämtliche Achsen angetrieben sind. Dadurch wird eine hohe Zugkraft erreicht, die beim Anfahren des mit einer Schwerlast beladenen Fahrzeug-Verbunds erforderlich ist. Bei ansteigender Geschwindigkeit des Fahrzeug-Verbunds werden dann in mehreren Fahr- bzw. Schaltstufen sukzessive einzelne der Gruppen von Achsen eines jeden Fahrzeugmoduls abgeschaltet, bis schließlich alle Achsen eines jeden Fahrzeugmoduls abgeschaltet sind und sich in ihrem Freilauf befinden. Eine derartige Ausbildung besitzt den Nachteil, dass sie nur wenig flexibel ist und aufgrund der wenigen Fahr- bzw. Schaltstufen regelmäßig ein ruckfreier Übergang zwischen den einzelnen Fahr- bzw. Schaltstufen nicht gegeben ist.

Aus der DE 10 2012 023 622 B3 ist ein Landfahrzeug mit nebeneinander und mit Abstand zueinander angeordneten und sich gemeinsam fortbewegenden Fahrwerken, die jeweils über eigene Antriebe für Räder oder Ketten des Fahrwerks verfügen, bekannt. Benachbarte Fahrwerke sind über Rahmengestelle derart miteinander gekoppelt, dass das Fahrwerk immer mindestens ein festes Lager zum Anschluss des Rahmengestells verfügt und dieses Rahmengestell mit dem benachbarten Fahrwerk über mindestens ein loses Lager verbunden ist, wobei das lose Lager mindestens eine begrenzte Verschiebbarkeit in Fahrwerkslängsrichtung gestattet und sich diese Anordnung bei den anderen Fahrwerken wiederholt. Hierdurch wird ein Landfahrzeug ausgebildet, das modulare Fahrwerke aufweist, wobei die einzelnen Fahrwerke in beweglicher Form miteinander verbunden sind. Die einzelnen Fahrwerke dieses Landfahrzeugs können sich daher im Rahmen der vorstehend beschriebenen losen Kopplung unabhängig voneinander bewegen. Die Fahrwerke verfügen daher in Fahrwerkslängsrichtung über ein gewisses Spiel, sodass von Fahrwerk zu Fahrwerk, bezogen auf eine die äußeren Fahrwerke verbindenden Gerade, ein Versatz möglich ist. Um zu ermöglichen, dass sich die Fahrwerke dieses Landfahrzeugs gemeinsam geradeaus bewegen oder eine Kurve durchlaufen können, ist vorgesehen, dass der Antrieb der Räder oder Ketten des Fahrwerks mindestens einen Antriebsmotor, eine vom Antriebsmotor angetriebene Hydraulikpumpe und mindestens ein steuerbares Ventil für den Ölvolumenstrom von der Hydraulikpumpe zum Hydraulikmotor zum Antrieb der Räder aufweist, wobei das steuerbare Ventil zentral steuerbar ist und dem steuerbaren Ventil mindestens ein sensorsteuerbares Ventil für den Ölvolumenstrom nachgeschaltet ist.

In der WO 2004/074031 A1 ist ein Fahrzeug-Verbund beschrieben, der ein Zugfahrzeug aufweist, an welches mehrere nicht-angetriebene Anhänger angekoppelt sind. Dann folgt ein angetriebener Anhänger, an den weitere nicht-angetriebene Anhänger angehängt sind, etc. Das Zugfahrzeug weist eine Antriebseinrichtung auf, welche mittels eines Gaspedals gesteuert wird. Die Antriebseinrichtung des angetriebenen Anhängers wird durch einen Handhebel gesteuert. Diese Druckschrift betrifft somit ein Kontrollsystem für ein Fahrzeug, das vom Fahrer bedienbar ist, wobei das Fahrzeug wenigstens zwei Antriebseinrichtungen und eine Bremseinrichtung aufweist, nämlich eine vom Fahrer betätigbare erste Gaspedal-Kontrolleinrichtung, die ausschließlich auf die erste Antriebseinrichtung einwirkt, und eine zweite Gaspedal-Kontrolleinrichtung, die ausschließlich auf die Antriebseinrichtung des angetriebenen Anhängers einwirkt. Das aus dieser Druckschrift bekannte System soll dazu dienen, im Falle einer Notbremsung die Antriebseinrichtung des angetriebenen Anhängers derart zu steuern, dass ihre Antriebsleistung unabhängig von der Stellung des Handhebels ist. Dadurch soll erreicht werden, dass im Falle einer Notbremsung, wenn der Fahrer nicht in der Lage ist, den Handhebel zu bedienen, die Antriebseinrichtung des angetriebenen Anhängers bei dieser Notbremsung nicht weiterhin den Fahrzeugverbund antreibt: Wenn das Zugfahrzeug hart gebremst wird, prüft das System, ob der Handhebel des Anhängers über der Leerlaufposition ist. Ist dies der Fall, befindet sich also die Antriebseinrichtung im Leerlauf, muss keine Aktion vorgenommen werden. Stellt das System im Falle einer Notbremsung fest, dass der Handhebel aktiviert ist, wird die Antriebseinrichtung des Anhängers in ihren Leerlauf heruntergefahren und das Getriebe wird entkoppelt. Dann werden noch weitere Sicherheitsabfragen durchgeführt. Charakteristisch ist also, dass die Steuereinrichtung nur auf die Antriebseinrichtung des angetriebenen Anhängers einwirkt.

Die EP 2 062 837 A1 beschreibt eine Förderanlage sowie ein Verfahren zu deren Betreiben. Die Flurförderanlage weist mehrere gleichartige, autonom betreibbare Transporteinheiten auf, die untereinander kommunizieren, sich gegenseitig identifizieren und sich funktionell, aber nicht mechanisch aus einem zu mehreren Transporteinheiten bestehenden Verbund zusammenschließen können. Die Flurförderanlage weist eine mit den Transporteinheiten kommunizierende und diese identifizierende zentrale Leitstelle auf. Zum Betreiben der Fiurförderanlage ist vorgesehen, dass in der Leitstelle abzuarbeitende Aufträge in einem Auftragspool gesammelt werden, wobei wenigstens der Abholort und Lieferort der Ladung sowie die sich daraus ergebende Anzahl dieser Transporteinheiten erfasst wird. Eine freie Transporteinheit wählt dann einen Auftrag aus und nimmt diesen an. Sie fährt dann zum Abholort und frägt bei der Leitstelle an, ob die benötigte Anzahl von weiteren Transporteinheiten den Auftrag angenommen haben. Ist dies nicht der Fall, fordert sie bei Leitstelle und/oder durch direkte Kommunikation mit weiteren Transporteinheiten diese an. Die Ladung. wird dann aufgenommen und vom Abholort zum Ziellieferort befördert.

Die DE 10 2012 102 648 A1 beschreibt ein modulares Bodentransportsystem, das insbesondere selbstfahrend und für schwere Montage- und Logistikprozesse ausgelegt. Hierbei ist vorgesehen, dass sich einzelne Transportmodule des Bodentransportsystem zu einem größeren Bodentransport zusammenschließen, wobei die Transportmodule miteinander gekoppelt werden, Die Steuereinrichtungen der Transportmodule kommunizieren miteinander, um eine gleichmäßige Fahr- und Lenkbewegung des größeren Bodentransportsystem in allen Richtungen zu ermöglichen.

Die WO 2007/062640 A1 beschreibt einen Fahrzeugverbund aus einer Vielzahl von Einzelfahrzeugen mit einem Chassis, bei dem zumindest an einem Einzelfahrzeug ein einzeln antreibbares und abbremsbares Rad angeordnet ist. Es ist ein Radträger mit an dessen Umfang angeordneten Rollkörpern vorgesehen, die eine ballige Kontur aufweisen und deren Drehachsen in einem Winkel zu der Drehachse des Radträgers angeordnet sind, mit denen eine Bewegung des Einzelfahrzeugs in alle Richtungen in der Fahrebene möglich ist. Die Einzelfahrzeuge sind über Verbindungselemente mechanisch miteinander gekoppelt und die Radantriebe der Einzelfahrzeuge sind über eine Verbundssteuerung selektiv ansteuerbar. Die mechanische Verbindung der Einzelfahrzeuge lässt eine Relativbewegung zueinander innerhalb der Fahrebene nicht zu, sodass eine sichere Positionierung der Lasten auf den Einzelfahrzeugen ermöglicht wird, ohne dass die Gefahr besteht, dass die Einzelfahrzeuge auf unterschiedlichen Routen fahren. Durch diese Verbundssteuerung ist es somit möglich, die jeweiligen Radantriebe so anzusteuern, dass nur das jeweils benötigte Rad angetrieben wird, sodass aus den Einzelfahrzeugen mit in der Regel vier angetriebenen Rädern ein Fahrzeugverbund wird, dessen Räder je nach Bedarf einzeln ansteuerbar sind, wobei insbesondere vorgesehen ist, dass die im Fahrzeugverbund an den Ecken angeordneten Räder angetrieben sind, während die innenliegenden Räder abgeschaltet oder als Hilfsahtriebe ausgestaltet sind.

Es ist daher Aufgabe der vorliegenden Erfindung, einen Fahrzeug-Verbund der eingangs genannten Art derart weiterzubilden, dass eine verbesserte Anpassung der einzelnen Fahrstufen der angetriebenen Fahrzeugmodule an die jeweilige Fahrsituation des Fahrzeug-Verbunds ermöglicht wird.

Diese Aufgabe wird erfindungsgemäß dadurch gelöst, dass die Steuereinrichtung den oder mindestens einen der Antriebsmotoren der angetriebenen Achsen mindestens zweier **Fahrzeugmodule** des mindestens einen Zugs des Fahrzeug-Verbunds zur Abstufung der Gesamt-Antriebsleistung des Fahrzeug-Verbunds fahrzeugmodulübergreifend steuert.

Erfindungsgemäß ist also vorgesehen, dass die Steuereinrichtung des Fahrzeug-Verbunds nicht nur jeweils fahrzeugmodulintern eine oder mehrere bestimmte Achsen eines jeden einzelnen Fahrzeugmoduls des Fahrzeug-Verbunds zu- oder abschaltet bzw. die Antriebsleistung dieser Achsen steuert, sondern dass durch die erfindungsgemäße Steuereinrichtung gezielt unterschiedliche Achsen unterschiedlicher Fahrzeugmodule des Fahrzeug-Verbunds ansteuerbar sind. Die Steuerung der einzelnen Achsen der angetriebenen Fahrzeugmodule des Fahrzeug-Verbunds erfolgt also in vorteilhafter Art und Weise fahrzeugmodulübergreifend. Eine derartige Maßnahme besitzt den Vorteil, dass hierdurch eine verbesserte Anpassung der Antriebsleistung der Achsen des durch die miteinander gekoppelten Fahrzeugmodule ausgebildeten Fahrzeug-Verbunds ermöglicht wird.

Durch die fahrzeugmodulübergreifende, individuelle Steuerung mindestens zweier und vorzugsweise aller oder fast aller angetriebenen Achsen der Fahrzeugmodule des Fahrzeug-Verbunds wird in vorteilhafter Art und Weise eine verfeinerte Abstufung der Antriebsleistung, insbesondere bei höheren Geschwindigkeiten, und somit ein verbessertes Fahrverhalten des Fahrzeug-Verbunds erreicht. Für eine hohe Zugkraft, die zum Anfahren und bei niedrigen Geschwindigkeiten sowie im Unterstützungsbetrieb erforderlich ist, sind alle oder fast alle angetriebenen Achsen aktiv, bei steigender Geschwindigkeit können einzelne Achsen je nach der erforderlichen Zugkraft nacheinander abgeschaltet werden.

Eine vorteilhafte Weiterbildung der Erfindung sieht vor, dass in mindestens einem Fahrzeugmodul des Fahrzeug-Verbunds mindestens zwei Achsen Antriebsmotoren mit jeweils unterschiedlicher Dimensionierung aufweisen. Eine derartige Maßnahme besitzt den Vorteil, dass hierdurch eine weiter verbesserte Abstufung der Antriebsleistung des erfindungsgemäßen Fahrzeug-Verbunds ermöglicht wird, ohne dass hierfür eine aufwendige Steuerung und/oder Regelung der einzelnen Antriebsmotoren der einzelnen Achsen erforderlich ist.

Eine weitere vorteilhafte Weiterbildung der Erfindung sieht vor, dass mindestens ein Antriebsmotor als ein Hydraulikmotor ausgebildet ist. Werden nun unterschiedliche Achsen eines oder mehrerer Fahrzeugmodule des Fahrzeug-Verbunds mit unterschiedlich großen Hydraulikmotoren ausgerüstet, die folglich aufgrund der ihrer unterschiedlichen Dimensionierung unterschiedlich große Schluckvolumina haben, so ermöglichen die erfindungsgemäßen Maßnahmen in vorteilhafter Art und Weise eine verbesserte Anpassung der Schluckvolumina der Hydraulikmotoren an die jeweilige Fahrsituation.

Weitere vorteilhafte Weiterbildungen der Erfindung sind Gegenstand der Unteransprüche.

Weitere Einzelheiten und Vorteile der Erfindung sind den Ausführungsbeispielen zu entnehmen, die im Folgenden anhand der Figuren beschrieben werden. Es zeigen:
- Figur 1: ein erstes Ausführungsbeispiel eines Fahrzeug-Verbunds,
- Figur 2: ein zweites Ausführungsbeispiel eines Fahrzeug-Verbunds,
- Figur 3: ein drittes Ausführungsbeispiel eines Fahrzeug-Verbunds, und
- Figur 4: ein viertes Ausführungsbeispiel eines Fahrzeug-Verbunds.

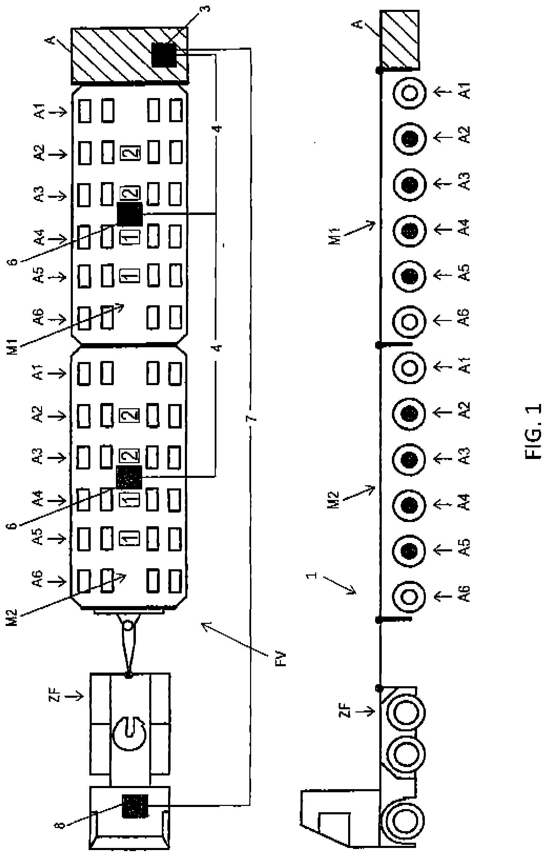

In Figur 1 ist ein allgemein mit 1 bezeichnetes Ausführungsbeispiel eines Fahrzeug-Verbunds FV dargestellt, der im hier gezeigten Fall als ein gezogener Fahrzeug-Verbund FV ausgebildet ist. Er weist zwei Fahrzeugmodule M1 und M2 auf, die in Fahrtrichtung des Fahrzeug-Verbunds FV hintereinander angeordnet und mechanisch miteinander gekoppelt sind und derart einen Zug Z1 des Fahrzeug-Verbunds FV ausbilden. Jedes Fahrzeugmodul M1, M2 weist - im hier gezeigten Fall - sechs Achsen A1 bis A6 auf, wobei die zweite und die dritte Achse A2 und A3 sowie die vierte und die fünfte Achsen A4 und A5 jeweils mittels eines in den Figuren nur schematisch gezeigten Antriebsmotors 1 bzw. 2 angetrieben sind. Die erste und die sechste Achse A1 und A6 sind jeweils nicht angetrieben. Dem Fachmann ist ersichtlich, dass die hier gezeigte Anzahl von sechs Achsen A1-A6 sowie die Anordnung der angetriebenen Achsen A1-A6 nur beispielhaften Charakter besitzt. Selbstverständlich kann die Anzahl und Anordnung der angetriebenen Achsen variieren.

Der Fahrzeug-Verbund FV weist ein Zugfahrzeug ZF eine Antriebseinrichtung A auf, welche dazu dient, die für den Antrieb der Antriebsmotoren 1 und 2 der Fahrzeugmodule M1, M2 erforderliche Antriebsenergie zu erzeugen. Im hier gezeigten Fall ist exemplarisch vorgesehen, dass die Antriebsmotoren 1 und 2 als Hydraulikmotoren ausgebildet sind. Die Antriebseinrichtung A weist ein nicht gezeigtes Antriebsaggregat auf, welches einen Verbrennungsmotor besitzt, der eine Pumpenanordnung zur Erzeugung eines hydraulischen Drucks antreibt. Durch in den Figuren nicht gezeigte Druckleitungen wird ein vom Antriebsaggregat der Antriebseinrichtung A druckbeaufschlagtes Druckmedium zu den Antriebsmotoren 1 und 2 geleitet. Es ist natürlich auch möglich, anstelle von Hydraulikmotoren pneumatisch angetriebene Motoren zu verwenden. In diesem Fall erzeugt die Antriebseinrichtung A ein pneumatisches Druckmedium. Auch die Verwendung von Elektromotoren ist möglich. Ebenfalls denkbar, aber nicht bevorzugt ist die Kombination der vorgenannten Arten von Antriebsmotoren.

Der Fahrzeug-Verbund FV weist eine Steuereinrichtung 3 auf, die über Steuerleitungen 4 mit den Antriebsmotoren 1, 2 der Achsen A2-A5 der Fahrzeugmodule M1 und M2 verbunden ist. Selbstverständlich ist es auch möglich, eine Verbindung zwischen der Steuereinrichtung und den Antriebsmotoren 1, 2 der Achsen A2-A5 drahtlos herzustellen. Die Steuereinrichtung 3 dient dazu, in Verbindung mit Steuereinrichtungen 6 der Fahrzeugmodule M1, M2 die Antriebsmotoren 1, 2 der Fahrzeugmodule M1, M2 zu steuern, wobei durch den Begriff "steuern" nicht nur ein Steuern im eigentlichen Sinn, sondern auch ein "Regeln" der Antriebsmotoren 1, 2 verstanden werden soll.

Im Gegenzug zu bekannten Fahrzeug-Verbünden, bei denen vorgesehen ist, dass die dort eingesetzte Steuerung der Antriebsmotoren 1 und 2 jeweils nur auf ein Fahrzeugmodul M1, M2 bezogen ist, ist hier vorgesehen, dass die Steuerung der Achsen A2-A5 der Fahrzeugmodule M1, M2 des Zugs Z1 zur Abstufung der Gesamt-Antriebsleistung des Fahrzeugverbunds FV fahrzeugmodulübergreifend erfolgt, also nicht fahrzeugmodulbezogen, sondern fahrzeugverbundbezogen durchgeführt wird. Die Steuereinrichtung 3 ist somit derart ausgebildet und konfiguriert, dass sie - in Abhängigkeit von der aktuell vom Fahrzeug-Verbund FV zu erbringenden Transportleistung, d.h. von der für eine bestimmte Fahrsituation erforderlichen Gesamt-Antriebsleistung, und somit von der von den angetriebenen Achsen A2-A5 aufzubringenden Antriebsleistungen - die Achsen A2-A5 sowohl des ersten Fahrzeugmoduls M1 als auch des zweiten Fahrzeugmoduls M2 individuell ansteuert. Die Steuereinrichtung 3 ist somit in Verbindung mit den Steuereinrichtungen 6 der Fahrzeugmodule M1, M2 in der Lage, einzelne Achsen A2-A5 der einzelnen Fahrzeugmodule M1 und M2 individuell an- und abzuschalten, so dass hierdurch eine Abstufung der Gesamt-Antriebsleistung des Fahrzeugverbunds FV erzielt wird. Dies soll am nachfolgenden Beispiel erläutert werden:
Beim Anfahren eines mit einer entsprechenden Schwerlast betriebenen Fahrzeug-Verbunds FV - z. B. eines gezogenen Fahrzeug-Verbunds - ist eine große Antriebsleistung erforderlich. In diesem Fall ist beim beschriebenen Ausführungsbeispiel vorgesehen, dass sämtliche Achsen A2-A5 der beiden Fahrzeugmodule M1 und M2 aktiv sind und zum Anfahren des Fahrzeug-Verbunds FV beitragen.

Ist der Fahrzeug-Verbund FV angefahren, so bedarf es für eine weitere Fortbewegung desselben nurmehr einer geringeren Zugkraft, die für das Anfahren des Fahrzeug-Verbunds FV erforderliche Zugkraft kann folglich reduziert und die Fahrgeschwindigkeit somit erhöht werden. Hierzu schaltet die Steuereinrichtung 3 beispielsweise eine Achse, z. B. die zweite Achse A2 des zweiten Fahrzeugmoduls M2 ab. Dann wird für eine weitere Reduzierung der Antriebsleistung eine weitere Achse, z. B. die dritte Achse A3 des zweiten Fahrzeugmoduls M2 abgeschaltet.

Durch ein sukzessives Abschalten weiterer Achsen der Fahrzeugmodule M1, M2 des Fahrzeug-Verbunds FV wird dann die Zugkraft weiter stufenweise reduziert und die Fahrgeschwindigkeit erhöht.

Das vorstehend beschriebene Beispiel zeigt, dass durch eine fahrzeugmodulübergreifende und auf den Fahrzeug-Verbund FV abstellende Steuerung die angetriebenen Achsen A2-A5 eine Vielzahl von Fahr-/Schaltstufen und somit eine feinere Abstufung der Antriebsleistung des Fahrzeug-Verbunds FV ermöglicht wird.

Vorzugsweise ist vorgesehen, dass die einzelnen Fahrzeugmodule M1, M2 unterschiedlich dimensionierte Antriebsmotoren 1, 2 haben. Im hier beschriebenen Beispiel ist vorgesehen, dass die mit 1 bezeichneten Antriebsmotoren der jeweiligen vierten und fünften Achsen A4 und A5 der beiden Fahrzeugmodule M1, M2 ein größeres Schluckvolumen besitzen als die mit 2 bezeichneten Antriebsmotoren der zweiten und dritten Achsen A2 und A3 der Fahrzeugmodule M1 und M2. Beispielsweise kann für die Antriebsmotoren 1 ein Hydraulikmotor mit einem Schluckvolumen von 1248 cm³ verwendet werden und für die Antriebsmotoren 2 vorgesehen sein, dass diese als Hydraulikmotoren mit einem Schluckvolumen von 627 cm³ ausgebildet sind. Durch die Verwendung derartig ausgebildeter Antriebsmotoren 1, 2 lässt sich in vorteilhafter Art und Weise eine noch feinere Abstufung der Fahrstufen des Fahrzeug-Verbunds FV erreichen.

Durch eine Bedieneinheit 8, die über eine Steuerleitung 7 oder kabellos mit der Steuereinrichtung 3 verbunden ist, können Fahrzustände angezeigt und am System Anpassungen des Fahrverhaltens vorgenommen werden.

Es ist auch denkbar, durch eine direkte Verbindung der Antriebsmotoren 1, 2 der Achsen A2-A5 der Fahrzeugmodule M1 und M2 mit der Steuereinrichtung 3 auf die Steuereinrichtungen 6 der Fahrzeugsmodule M1, M2 zu verzichten.

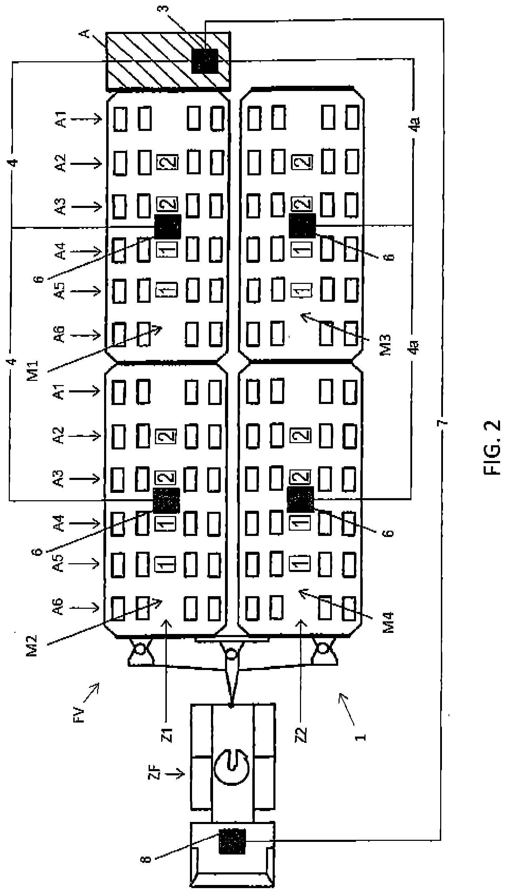

In Figur 2 wird ein zweites Ausführungsbeispiel eines Fahrzeug-Verbunds FV dargestellt, bei dem einander entsprechende Komponenten mit den gleichen Bezugszeichen versehen und nicht mehr erneut erläutert werden. Der wesentliche Unterschied zwischen dem ersten und zweiten Ausführungsbeispiel ist, dass der Fahrzeug-Verbund FV des zweiten Ausführungsbeispiels nicht nur die bereits im ersten Ausführungsbeispiel vorhandenen Fahrzeugmodule M1 und M2 besitzt, sondern noch zwei weitere Fahrzeugmodule M3 und M4 aufweist, wobei die Fahrzeugmodule M3 und M4 - genauso wie die Fahrzeugmodule M1 und M2 - durch entsprechende mechanische Mittel miteinander gekoppelt sind. Die Fahrzeugmodule M1 und M2 sowie die Fahrzeugmodule M3 und M4 bilden somit zwei parallele, nebeneinander angeordnete Züge Z1 und Z2 des Fahrzeug-Verbunds FV auf, die mittels ebenfalls nicht gezeigter mechanischer Querverbindungsmittel miteinander gekoppelt sind. Die Steuereinrichtung 3 ist - wie beim ersten Ausführungsbeispiel - über die Steuerleitung 4 mit den Achsen A2-A5 des ersten und des zweiten Fahrzeugmoduls M1 und M2 verbunden. Zusätzlich ist hier noch eine zweite Steuerleitung 4a vorgesehen, welche die Steuereinrichtung 3 des Fahrzeug-Verbunds FV mit den Achsen A2-A5 des dritten und des vierten Fahrzeugmoduls M3 und M4 verbindet. Die Steuereinrichtung 3 kann somit individuell sowohl die Achsen A2-A5 des ersten und des zweiten Fahrzeugmoduls M1 und M2 des ersten Zugs Z1 sowie auch die Achsen A2-A5 des dritten und des vierten Fahrzeugmoduls M3 und M4 des zweiten Zugs Z2 ansteuern. Auch hier wird wiederum bevorzugt, dass die Antriebsmotoren 1 und 2 der Fahrzeugmodule M1-M4 mit unterschiedlichen Schluckvolumen ausgebildet sind.

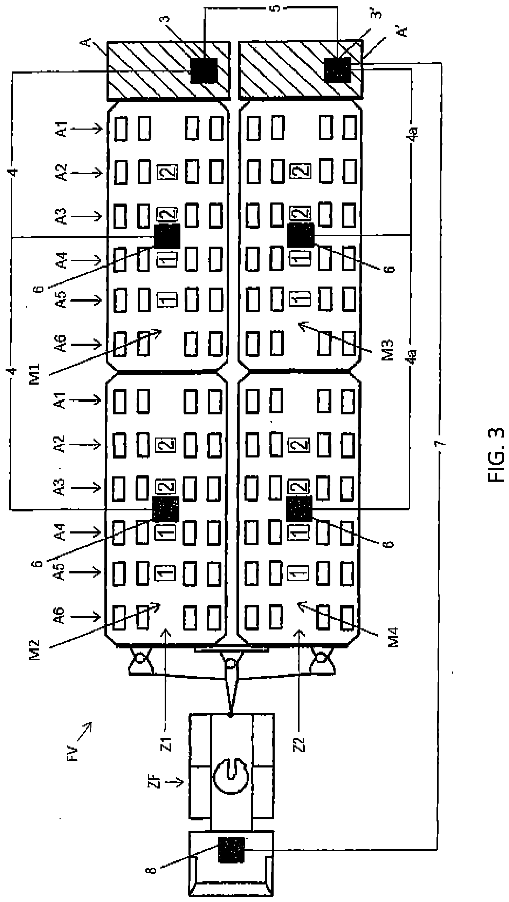

In Figur 3 ist ein drittes Ausführungsbeispiel eines Fahrzeug-Verbunds FV dargestellt, das seinem Grundaufbau nach demjenigen des zweiten Ausführungsbeispiels entspricht. Es sind also hier wieder zwei Züge Z1 und Z2 mit jeweils zwei Fahrzeugmodulen M1 und M2 bzw. M3 und M4 vorhanden. Der wesentliche Unterschied zwischen dem zweiten und dem dritten Ausführungsbeispiel ist, dass hier nicht nur der die Fahrzeugmodule M1 und M2 aufweisende erste Zug Z1 des Fahrzeug-Verbunds FV eine Antriebseinrichtung A mit einer Steuereinrichtung 3 besitzt, sondern dass auch der zweite Zug Z2 eine der Antriebseinrichtung A entsprechende Antriebseinrichtung A' und eine der Steuereinrichtung 3 entsprechende Steuereinrichtung 3' besitzt. Die Steuereinrichtung 3 ist über die Steuerleitung 4 der Achsen A2-A5 des ersten Fahrzeugmoduls M1 und M2 verbunden, während die weitere Steuerleitung 4a die Steuereinrichtung 3' mit den Achsen A2-A5 des dritten und vierten Fahrzeugmoduls M3 und M4 verbindet. Zusätzlich ist vorgesehen, dass die Steuereinrichtungen 3 und 3' über eine - vorzugsweise direktionale - Steuerleitung 5 - oder drahtlos - miteinander verbunden sind, so dass eine Kommunikation zwischen diesen beiden Steuereinrichtungen 3 und 3' ermöglicht ist.

Die vorstehenden Ausführungsbeispiele gehen davon aus, dass der Fahrzeug-Verbund FV als ein gezogener Fahrzeug-Verbund mit Unterstützungsantrieb ausgebildet ist, wie er z. B. durch Fahrzeuge des Typs InterCombi der Anmelderin ausgebildet werden kann.

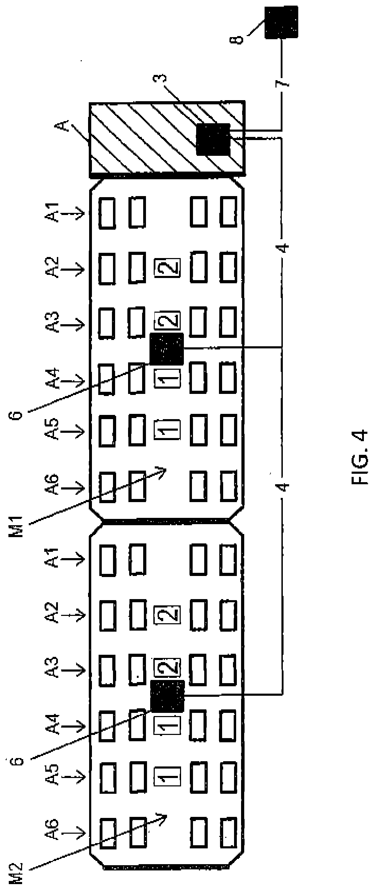

Es ist aber auch möglich, die beschriebene Ausgestaltung der Fahrzeugmodule M1-M4 bei einem selbstfahrenden Fahrzeug-Verbund, also bei einem Fahrzeug-Verbund, bei dem die Fahrzeugmodule M1-M4 von Antriebseinrichtungen der Fahrzeugmodule M1, M2 angetrieben werden, zu verwenden. Die Figur 4 zeigt einen derartigen Aufbau. Der wesentliche Unterschied zwischen dem Ausführungsbeispiel der Figur 4 und demjenigen der Figur 1 ist, dass den Fahrzeugmodulen M1 und M2 kein Zugfahrzeug ZF vorgeschaltet ist. Der durch die Achsen A2-A5 der Fahrzeugmodule M1 und M2 in Verbindung mit der Antriebseinrichtung A ausgebildete Antrieb dient dazu, den Fahrzeug-Verbund als Selbstfahrer anzutreiben. Auch hier erlauben die beschriebenen Maßnahmen eine verbesserte Abstimmung der Antriebsleistung des Antriebs und ein verbessertes Gesamt-Fahrverhalten des Fahrzeug-Verbunds sowie dem Erreichen höherer Fahrgeschwindigkeiten.

## Patentansprüche

1. Fährzeug-Verbund mit mindestens einem aus mehreren angetriebenen Fahrzeugmodulen (M1-M4) bestehenden Zug (Z1; Z2), wobei die zu dem mindestens einen Zug (Z1; Z2) gehörenden Fahrzeugmodule (M1, M2; M3, M4) in Fahrtrichtung des Fahrzeug-Verbunds hintereinander angeordnet und mechanisch miteinander gekoppelt sind, wobei jedes Fahrzeugmodul (M1-M4) mindestens eine angetriebene Achse (A2-A5) mit mindestens einem Antriebsmotor (1; 2) aufweist, wobei der Fahrzeug-Verbund (FV) mindestens eine Antriebseinrichtung (A; A') für die Antriebsmotoren (1, 2) der Achsen (A2-A5) der Fahrzeugmodule (M1-M4) aufweist, durch welche die zum Antrieb dieser Antriebsmotoren (1, 2) benötigte Antriebsenergie erzeugbar ist, und wobei der Fahrzeug-Verbund (FV) mindestens eine Steuereinrichtung (3; 3') besitzt, durch welche zumindest die Antriebsmotoren (1, 2) der angetriebenen Achsen (A2-A5) der Fahrzeugmodule (M1-M4) ansteuerbar sind, **dadurch gekennzeichnet, dass** die Steuereinrichtung (3; 3') den oder mindestens einen der Antriebsmotoren (1, 2) der angetriebenen Achsen (A2-A5) mindestens zweier **Fahrzeugmodule** (M1, M2; M3, M4) des mindestens einen Zugs (Z1; Z2) des Fahrzeug-Verbunds (FV) zur Abstufung der Gesamt-Antriebsleistung des Fahrzeug-Verbunds (FV) fahrzeugmodulübergreifend steuert.

2. Fahrzeug-Verbund nach Anspruch 1, **dadurch gekennzeichnet, dass** mindestens ein Fahrzeugmodul (M1-M4) des Fahrzeug-Verbunds (FV) mindestens zwei unterschiedlich dimensionierte Antriebsmotoren (1; 2) aufweist.

3. Fahrzeug-Verbund nach einem der Ansprüche 1 oder 2, **dadurch gekennzeichnet, dass** ein erster Zug (Z1) des Fahrzeug-Verbunds (FV) die Antriebseinrichtung (A) und die Steuereinrichtung (3) aufweist, und dass die Steuereinrichtung (3) den oder die Antriebsmotoren (1, 2) der angetriebenen Achsen (A2-A5) der Fahrzeugmodule (M1, M2) dieses Zugs (Z1) steuert.

4. Fahrzeug-Verbund nach einem der vorangehenden Ansprüche, **dadurch gekennzeichnet, dass** der Fahrzeug-Verbund (FV) mindestens einen weiteren aus mindestens zwei Fahrzeugmodulen (M3, M4) gebildeten weiteren Zug (Z2) aufweist.

5. Fahrzeug-Verbund nach einem der vorangehenden Ansprüche, **dadurch gekennzeichnet, dass** die Steuereinrichtung (3) des ersten Zugs (Z1) den oder die Antriebsmotoren (1, 2) der angetriebenen Achsen (A2-A5) dieses weiteren Zugs (Z2) steuert.

6. Fahrzeug-Verbund nach Anspruch 4, **dadurch gekennzeichnet, dass** der weitere Zug (Z2) eine weitere Antriebseinrichtung (A') und eine weitere Steuereinrichtung (3') besitzt, und dass eine weitere Steuereinrichtung (3') den oder die Antriebsmotoren (1, 2) der angetriebenen Achsen (A2-A5) der Fahrzeugmodule (M3, M4) dieses weiteren Zugs (Z2) steuert.

7. Fahrzeug-Verbund nach dem vorangehenden Anspruch, **dadurch gekennzeichnet, dass** die Steuereinrichtung (3) des ersten Zugs (Z1) und die Steuereinrichtung (3') des weiteren Zugs (Z2) durch eine Steuerleitung (5) miteinander verbunden sind.

8. Fahrzeug-Verbund nach einem der vorangehenden Ansprüche, **dadurch gekennzeichnet, dass** mindestens ein Fahrzeugmodul (M1-M4) eine fahrzeugmodulinterne Steuereinrichtung (6) besitzt, welche mit der Steuereinrichtung (3; 3') verbunden ist.

9. Fahrzeug-Verbund nach einem der vorangehenden Ansprüche, **dadurch gekennzeichnet, dass** die Steuereinrichtung (3; 3') mit einer Bedieneinrichtung (8) verbunden ist.

10. Fahrzeug-Verbund nach einem der vorangehenden Ansprüche, **dadurch gekennzeichnet, dass** durch die mindestens eine Steuereinrichtung (3; 3') der oder die Antriebsmotoren (1, 2) der angetriebenen Achsen (A2-A5) der Fahrzeugmodule (M1-M4) an- und abschaltbar sind.

## Claims

1. Vehicle combination with at least one train (Z1; Z2) comprising several driven vehicle modules (M1-M4), in which the vehicle modules (M1, M2; M3, M4) belonging to the at least one train (Z1; Z2) are arranged in the drive direction of the vehicle combination one after the other and are mechanically coupled, each vehicle module (M1-M4) having at least one driven axle (A2-A5) with at least one drive motor (1; 2), the vehicle combination (FV) having at least one power unit (A; A') for the drive motors (1, 2) of the axles (A2-A5) of the vehicle modules (M1-M4), through which the drive energy required for driving said drive motors (1, 2) can be generated, the vehicle combination (FV) having at least one control means (3; 3'), by which at least the drive motors (1, 2) of the driven axles (A2-A5) of the vehicle modules (M1-M4) can be controlled, **characterized in that** the control means (3; 3') controls the or at least one of the drive motors (1, 2) of the driven axles (A2-A5) of at least two vehicle modules (M1, M2; M3, M4) of at least one train (Z1; Z2) of the vehicle combination (FV) for graduating the total drive power of the vehicle combination (FV) across the vehicle modules.

2. Vehicle combination according to claim 1, **characterized in that** at least one vehicle module (M1-M4) of the vehicle combination (FV) has at least two differently dimensioned drive motors (1; 2).

3. Vehicle combination according to one of the claims 1 or 2, **characterized in that** a first train (Z1) of the vehicle combination (FV) is provided with the power unit (A) and the control means (3), and that the control means (3) controls the drive motor or the drive motors (1, 2) of the driven axles (A2-A5) of the vehicle modules (M1, M2) of this train (Z1).

4. Vehicle combination according to one of the previous claims, **characterized in that** the vehicle compound (FV) comprises at least one further train (Z2) having at least two vehicle modules (M3, M4).

5. Vehicle combination according to one of the previous claims, **characterized in that** the control means (3) of the first train (Z1) controls the drive motor or the drive motors (1, 2) of the driven axles (A2-A5) of said further train (Z2).

6. Vehicle combination according to claim 4, **characterized in that** the further train (Z2) comprises a further power unit (A') and a further control means (3'), and that said further control means (3') controls the drive motor or the drive motors (1, 2) of the driven axles (A2-A5) of the vehicle modules (M3, M4) of said further train (Z2).

7. Vehicle combination according to the previous claim, **characterized in that** the control means (3) of the first train (Z1) and the control means (3') of said further train (Z2) are connected via a control line (5).

8. Vehicle combination according to one of the previous claims, **characterized in that** at least one vehicle module (M1-M4) has got a vehicle-module-internal control means (6), which is connected with the control means (3; 3').

9. Vehicle combination according to one of the previous claims, **characterized in that** the control means (3; 3') is connected with an operating unit (8).

10. Vehicle combination according to one of the previous claims, **characterized in that** by means of the at least one control means (3; 3') the drive motor or the drive motors (1, 2) of the driven axles (A2-A5) of the vehicle modules (M1-M4) can be switched on and off.

## Revendications

1. Ensemble de véhicules avec au moins un train (Z1 ; Z2) comprenant plusieurs modules de véhicule (M1 - M4) entraînés, les modules de véhicule (M1, M2 ; M3, M4) faisant partie de l'au moins un train (Z1 ; Z2) étant disposés les uns derrière les autres dans le sens de déplacement de l'ensemble de véhicules et sont couplés les uns aux autres de manière mécanique, chaque module de véhicule (M1 - M4) présentant au moins un essieu (A2 - A5) entraîné avec au moins un moteur d'entraînement (1 ; 2), l'ensemble de véhicules (FV) présentant au moins un dispositif d'entraînement (A ; A') pour les moteurs d'entraînement (1, 2) des essieux (A2 - A5) des modules de véhicule (M1 - M4), lequel permet de générer l'énergie d'entraînement nécessaire aux fins de l'entraînement desdits moteurs d'entraînement (1, 2), et l'ensemble de véhicules (FV) possédant au moins un dispositif de commande (3 ; 3'), qui permet de commander au moins les moteurs d'entraînement (1, 2) des essieux (A2 - A5) entraînés des modules de véhicule (M1 - M4), **caractérisé en ce que** le dispositif de commande (3 ; 3') commande le ou au moins un des moteurs d'entraînement (1, 2) des essieux (A2 - A5) entraînés d'au moins deux modules de véhicule (M1, M2 ; M3, M4) de l'au moins un train (Z1 ; Z2) de l'ensemble de véhicules (FV) afin d'étager la puissance d'entraînement global de l'ensemble de véhicules (FV) à travers les modules de véhicule.

2. Ensemble de véhicules selon la revendication 1, **caractérisé en ce qu'**au moins un module de véhicule (M1 - M4) de l'ensemble de véhicules (FV) présente au moins deux moteurs d'entraînement (1, 2) de dimensions différentes.

3. Ensemble de véhicules selon l'une quelconque des revendications 1 ou 2, **caractérisé en ce qu'**un premier train (Z1) de l'ensemble de véhiculas (FV) présente le dispositif d'entraînement (A) et le dispositif de commande (3), et que le dispositif de commande (3) commande le ou les moteurs d'entraînement (1, 2) des essieux (A2 - A5) entraînés des modules de véhicule (M1, M2) dudit train (21).

4. Ensemble de véhicules selon l'une quelconque des revendications précédentes, **caractérisé en ce que** l'ensemble de véhicules (FV) comporte au moins un deuxième train (Z2) formé à partir d'au moins deux modules de véhicule (M3, M4).

5. Ensemble de véhicules selon l'une quelconque des revendications précédentes, **caractérisé en ce que** le dispositif de commande (3) du premier train (Z1) commande le ou les moteurs d'entraînement (1, 2) des essieux (A2 - A5) entraînés dudit train (Z2) supplémentaire.

6. Ensemble de véhicules selon la revendication 4, **caractérisé en ce que** le deuxième train (Z2) possède un dispositif d'entraînement (A') et un dispositif de commande (3'), et que le dispositif de commande (3') commande le ou les moteurs d'entraînement (1, 2) des essieux (A2 - A5) entraînés des modules de véhicule (M3, M4) dudit deuxième train (Z2).

7. Ensemble de véhicules selon la revendication précédente, **caractérisé en ce que** le dispositif de commande (3) du premier train (Z1) et le dispositif de commande (3') du deuxième train (Z2) sont reliés l'un à l'autre par une ligne de commande (5).

8. Ensemble de véhicules selon l'une quelconque des revendications précédentes, **caractérisé en ce qu'**au moins un module de véhicule (M1 - M4) possède un dispositif de commande (6) interne au module de véhicule, lequel est relié au dispositif de commande (3 ; 3').

9. Ensemble de véhicules selon l'une quelconque des revendications précédentes, **caractérisé en ce que** le dispositif de commande (3 ; 3' est relié à un dispositif d'utilisation (8).

10. Ensemble de véhicules selon l'une quelconque des revendications précédentes, **caractérisé en ce que** le ou les moteurs d'entraînement (1, 2) des essieux (A2 - A5) entraînés des modules de véhicule (M1 - M4) peuvent être activés et désactivés par l'au moins un dispositif de commande (3 ; 3').
